Europäisches Patentamt

European Patent Office

Office européen des brevets

(11) Publication number: **0 453 049 A1**

# EUROPEAN PATENT APPLICATION

(21) Application number: **91200944.6**

(22) Date of filing: **19.04.91**

(51) Int. Cl.5: **E04C 3/09, A01G 9/14**

(30) Priority: **19.04.90 NL 9000929**

(43) Date of publication of application:
**23.10.91 Bulletin 91/43**

(84) Designated Contracting States:
**DE FR GB NL**

(71) Applicant: **PRINS DOKKUM B.V.**
**Rondweg 35**
**NL-9101 BE Dokkum(NL)**

(72) Inventor: **Baalbergen, Henk**
**P.C. Stamstraat 116**
**NL-7442 ZE Nijverdal(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) **Lattice girder, suitable in particular for a horticultural greenhouse.**

(57) This invention relates to a lattice girder, suitable in particular for a horticultural greenhouse, comprising two superposed chord members (2,3) extending in the longitudinal direction of the lattice girder. The chord members (2,3) are interconnected by comparatively short web members extending obliquely relative to the chord members (5-9). According to the invention, the web members (5-9) have flat ends (10-17) and the flat ends are welded to the chord members (23) along a line extending obliquely relative to the longitudinal axis of the chord members (2,3).

FIG. 1

This invention relates to a lattice girder, suitable in particular for a horticultural greenhouse, comprising two superposed chord members extending in the longitudinal direction of the lattice girder, the chord members being interconnected by comparatively short web members extending obliquely relative to the chord members.

It is well known to use lattice girders or trusses, sometimes referred to as trellis girders, for greenhouses in glasshouse horticulture. Such girders are supported by columns and themselves in turn support the roofs of the greenhouse via the channels extending transverse of the longitudinal direction of the girders.

In order to avoid any loss of light in the greenhouse as much as possible, the girders should be of the lightest possible construction. On the other hand, a largest possible span is desirable, especially in relatively high greenhouses. In the case of high greenhouses, the columns are comparatively expensive and according as more columns are required, there is greater loss of space and light.

Lattice girders of the type described hereinabove are known from Netherlands patent application 80,05455. Such lattice girders are sometimes referred to as flat lattice girders, i.e. lattice girders which, apart from the thickness of the materials used, are substantially in a vertical plane. In the case of flat lattice girders, the loss of light is slight, but the phenomenon occurs that the lattice girders upon increasing load first tend to buckle laterally. In that event, a lattice girder mounted on a plurality of columns acquires, as viewed in bottom or top plan view, a wavy form with nodes at the columns. A consequence thereof is that torque is generated both in the columns and in the channel supports. As a result, the channels may assume a wavy form too, so that the entire roof construction of the greenhouse is deformed.

A consequence of these phenomena is that the effective strength of a flat lattice girder is not determined by the load causing an unacceptable degree of deflection in the vertical plane, but by the load causing an unacceptable degree of lateral buckling.

Accordingly, heretofore, for relatively large spans, latticed trusses have been used which are triangular in cross section, whereby as a result of the comparatively large dimensions in the horizontal plane, the risk of buckling is considerably reduced.

However, a drawback of such triangular trusses is that they are comparatively heavy and take away a comparatively great deal of light.

It is an object of the invention to provide a lattice girder which is suitable in particular for use in a horticultural greenhouse, and which is flat and light and still suitable for comparatively large spans.

To that end, according to the invention a lattice girder of the type described hereinabove is characterized in that the web members have flat ends, and that the flat ends are welded to the chord members along a line extending obliquely relative to the longitudinal axis of the chord members.

Hereinafter the invention will be further described, by way of example, with reference to the accompanying drawings of one embodiment. In said drawings:

Fig. 1 is a diagrammatic side-elevational view of a part of one embodiment of a lattice girder according to the invention;

Fig. 2 is a diagrammatic cross section taken on the line II-II of a detail of a preferred embodiment of a lattice girder according to the invention; and

Fig. 3 is a diagrammatic cross section taken on the line III-III of Fig. 1, of a detail of one embodiment of a lattice girder according to the invention.

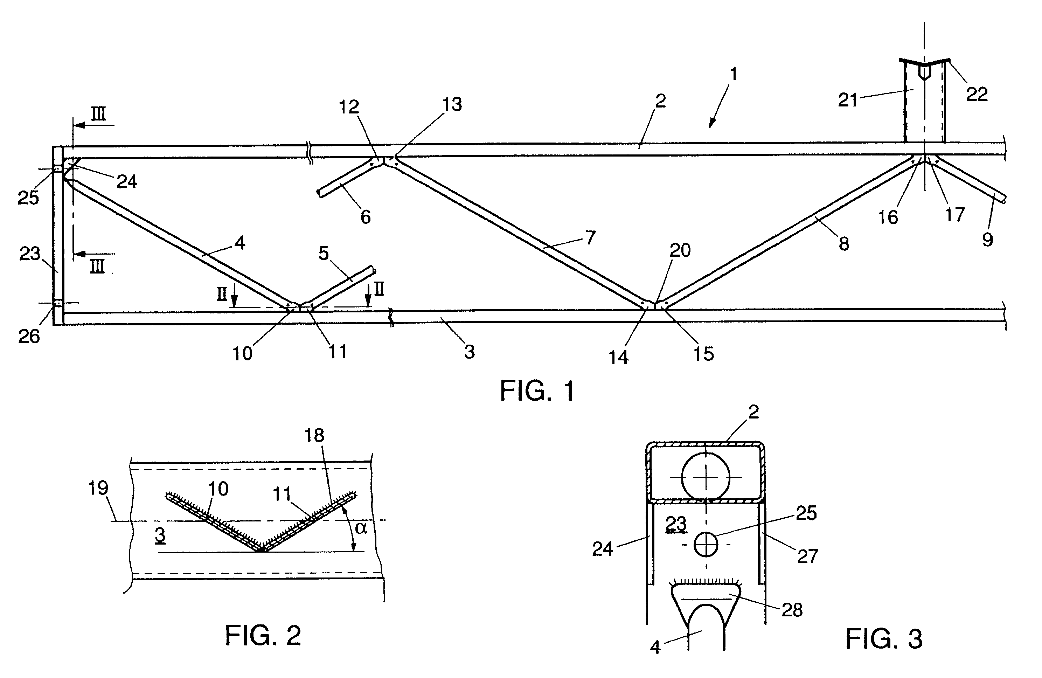

Fig. 1 is a diagrammatic side elevational view of a part of an embodiment of a lattice girder 1 according to the invention comprising two chord members 2,3 extending substantially parallel to each other in the longitudinal direction of the lattice girder. The two chord members are connected to each other by means of a plurality of inclined, comparatively short substantially straight web members 4,5,6,7,8,9. The lattice girder is therefore a flat lattice girder.

The chord members may for instance be made from tubing, bar stock, U-section, or differently shaped section material. Preferably, the surface of each chord member that is directed towards the other chord member, is a flat surface, so that the web members can be welded to the chord members in a simple manner.

In the embodiment shown, the web members are mounted in such a way that a web member extending from the bottom chord 3 to the top chord adjoins a web member extending from the top chord to the bottom chord. For example, the web member 8 directed upwards to the right, adjoins the web member 7 directed downwards to the right adjacent the bottom chord 3 and it adjoins the web member 9 directed downwards to the right adjacent the top chord. However, it is not necessary for the web members to adjoin each other in this manner. The web members may also be mounted with their ends in staggered relationship relative to each other.

The web members have flat ends 10 through 17, which are welded to the chord members 2 and 3. For that purpose, the web members may in conventional manner be made from sections of tubing, of which the ends have been flattened.

According to the invention, now optimum resistance to both bending and buckling is obtained by welding the flat ends of the web members to the chord members in inclined position relative to the longitudinal direction of the chord members.

The flat ends of two mutually adjoining web members could for instance be welded on the corresponding chord member in parallel relationship. Fig. 2 shows an embodiment in which the mutually adjoining ends of two web members have been welded to the corresponding chord member in a V-shape.

Fig. 2 is a section taken on the line II-II of Fig. 1, showing the ends 10,11 of the web members 4,5, which are jointly welded to the bottom chord along a V-shaped line. An advantage of the use of flat ends is that the flat ends can be welded from one side with a single welding action. This is of importance because a welding operation is comparatively expensive and the number of welding operations determines to a large extent the production time and the production costs. By using flat web member ends positioned on the chord members in V-shape, now two mutually adjoining web members can be welded with a single V-shaped welding action. The V-shaped weld is indicated in Fig.2 at 18.

In the embodiment shown, the flat ends of the web members and hence the legs of the V-shape make an angle of approx. 30° with the longitudinal axis 19 of the chord member 3.
Accordingly, the legs of the V-shape contain an obtuse angle. Naturally, other angles are also possible, but an obtuse angle provides good accessibility of the inner side of the V-shape so that welding can also be done on that side.

The flat ends of two mutually adjoining web members can be shaped such that they abut each other over some distance in the direction transverse of the chord members, as shown in Fig. 1 at 20 for web members 7 and 8. Optionally, the web members may also be welded together in this area, so that a force transmission directly from one web member to the other is possible.

Fig. 1 further shows a channel support 21 supported by the lattice girder, with a channel bracket 22. Further, in Fig. 1 the left end of the lattice girder can be seen. The end is closed off by upright strip 23 welded against the end faces of the chord members 2 and 3. In the embodiment shown the strip 23 is connected to the top chord 2 by means of one or more tie plates 24. Furthermore, in this embodiment the web member 4 terminates on the upright strip 23 so that the web member 4 together with the upright strip and the bottom chord forms a triangular construction. The joint of the chord member 2 is thereby relieved.

The upright strip is provided with bores 25,26, so that the lattice girder can be secured to an adjacent lattice girder by means of bolts. In the chord member 2 and the diagonal web member 4 tensile forces are generated, which must be taken up by the bolts. The tie plates 24 appropriately pass the forces to a bolt mounted in bore 25.

Fig. 3 is a diagrammatic section taken on the line III-III of Fig. 1, of a detail of Fig. 1. As can be seen in Fig. 3, adjacent to the joint between the upright strip 23 and the top chord, two tie plates 24 and 27 are provided. Further, the web member 4 is welded to the upright strip by a flattened - in this example horizontally positioned - end 28, so that the web member 4 also contributes to preventing the bottom chord from buckling.

It is observed that after the foregoing, various modifications will readily occur to those skilled in the art. Thus, for the chord members and the web members, various section forms can be selected, hollow or solid. Further, as stated, the lattice girder described is suitable in particular for use in horticultural greenhouses and more particularly horticultural greenhouses of the Venlo type. Still, a lattice girder according to the invention can be used in any construction where lattice girders are normally used. These and similar modifications are understood to fall within the scope of the invention.

## Claims

1. A lattice girder, suitable in particular for a horticultural greenhouse, comprising two superposed chord members extending in the longitudinal direction of the lattice girder, said chord members being interconnected by comparatively short web members extending obliquely relative to said chord members, characterized in that the web members have flat ends and that the flat ends are welded to said chord members along a line extending obliquely relative to the longitudinal axis of said chord members.

2. A lattice girder according to claim 1, characterized in that at least two web members adjoin each other at the point of attachment to at least one of said chord members and that the flat ends of the two mutually adjoining web members are welded to the corresponding chord member along a V-shaped line.

3. A lattice girder according to claim 2, characterized in that the legs of the V-shaped line contain an obtuse angle.

4. A lattice girder according to claim 2 or 3, characterized in that the flat ends of the mutually adjoining web members are each provided with an edge that is upright relative to the chord member, said edge abutting the corresponding edge of the flat end of the other web member.

5. A lattice girder according to claim 4, characterized in that the upright edges of two mutually adjoining web members are welded together.

6. A lattice girder according to any one of claims 1-5, characterized in that the flat ends are welded to the chord members on one side.

7. A lattice girder according to any one of the preceding claims, characterized in that the surfaces of the two chord members that are directed towards each other are substantially flat.

8. A lattice girder according to any one of the preceding claims, characterized in that there is provided at at least one end of the lattice girder an upright strip, which is welded against the free ends of the chord members.

9. A lattice girder according to claim 8, characterized in that the upright strip is provided with one or more bolt holes for attachment to an adjacent lattice girder, or a column of the greenhouse.

10. A lattice girder according to claim 8 or 9, characterized in that one or more tie plates are mounted between the upright strip and at least one of said chord members.

11. A lattice girder according to any one of claims 5-10, characterized in that the web member disposed at the end of a lattice girder is welded to the upright strip by one end.

12. A lattice girder according to claims 10 and 11, characterized in that at least one bolt hole is provided at the level of the point of attachment of said at least one tie plate to the upright strip and that the web member disposed at the terminal end is welded transversely to the upright strip by a flattened end, beyond said bolt hole, as viewed from the chord member.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | NL-A-8 005 455 (ZUID-NEDERLANDSE STAALBOUW) <br> * page 3, line 19 - page 3, line 35 * * page 4, line 1 - page 4, line 19 * * page 5, line 26 - page 5, line 32; claim 1; figures 1,2 * | 1,7,8,9 | E 04 C 3/09 <br> A 01 G 9/14 |
| Y | AU-A-5 226 54 (LYSAGHT) <br> * page 4, paragraph 2 - page 4, paragraph 4 * * page 5, paragraph 10 @ page 6, paragraph 1 - page 6, paragraph 2 @ page 7, paragraph 3; figures 2,3,4,10-16 * | 1,7,8,9 | |
| Y,A | DE-A-2 409 633 (LAMPSON) <br> * page 3, paragraph 2 - page 3, paragraph 5; figures 1-3 * | 1,2,3,7,12 | |
| Y | DE-A-1 907 455 (BAUMANN) <br> * page 6, paragraph 2 - page 6, paragraph 3 * * page 7, paragraph 1; claims 1,3; figures 1-3,10-12 * | 1,2,3,7 | |
| A | DE-C-9 644 37 (GESSNER) <br> * page 2, line 37 - page 2, line 43; figures 1-5 * | 1,2,4,5 | |
| A | GB-A-8 137 29 (SHERRATT & SMITH) <br> * claim 1; figures 1-4 * | 1,6,8 | TECHNICAL FIELDS SEARCHED (Int. Cl.5) |
| A | FR-A-2 231 275 (FAUCONNIER) <br> * page 1, line 32 - page 1, line 36 * * page 2, line 1 - page 2, line 12; figure 1 * | 8,9,10 | E 04 C |
| A | FR-A-2 041 302 (VERLINDE) | | |

The present search report has been drawn up for all claims

| Place of search | Date of completion of search | Examiner |
|---|---|---|
| The Hague | 12 July 91 | HENDRICKX X. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document